# EUROPEAN PATENT SPECIFICATION

(11) **EP 0 430 843 B1**
(45) Date of publication and mention of the grant of the patent: **03.01.1996**
(21) Application number: 90480165.1
(22) Date of filing: 17.10.1990
(51) Int. Cl.: G06F 11/22

(54) **Method and apparatus for fault testing microprocessor address, data and control busses**
Anordnung und Verfahren zum Fehlertesten von Adressen-, Daten- und Steuerbussen eines Mikroprozessors
Méthode et dispositif pour tester les fautes de bus d'adresses, de données et de contrôle d'un microprocesseur

(30) Priority: 30.11.1989 US 444076
(43) Date of publication of application: 05.06.1991
(73) Proprietor: International Business Machines Corporation, Armonk, N.Y. 10504 (US)
(72) Inventor: Clark, Scott Douglas, Rochester, Minnesota 55901 (US); Hinz, Kenneth Claude, Rochester, Minnesota 55901 (US); Randolph, Jack Chris, Rochester, Minnesota 55902 (US); Rudquist, Mark Loren, Rochester, Minnesota 55904 (US); Walker, Thomas Milton, Rochester, Minnesota 55904 (US)
(74) Representative: Vekemans, André

(56) References cited:
- US-A- 4 847 838
- IBM TECHNICAL DISCLOSURE BULLETIN. vol. 30, no. 8, January 1988, NEW YORK US pages 324 - 326; 'Apparatus for detection and isolation of failures '
- IBM TECHNICAL DISCLOSURE BULLETIN. vol. 32, no. 8A, January 1990, NEW YORK US pages 45 - 48; 'Bus stuck-fault algorithm '

## Description

The present invention relates to a method of testing a microprocessor-based system and more particularly to a method and apparatus for stuck fault testing address, data and control busses in a microprocessor-based system.

Each signal line in the address, data and control busses in a microprocessor system is susceptible to stuck faults or permanent static bit failures where a signal line is fixed at either a logical one "1" or a logical zero "0". When parity error checking routines are not supported by the microprocessor, random and unpredictable failures result from a stuck fault on the microprocessor bus.

Various techniques have been employed for stuck fault testing in microprocessor-based systems. Many known techniques are particularly adapted for testing internal logic functions of individual chips including the microprocessor in the microprocessor-based system. Examples of such testing techniques are disclosed in U.S. patent Nos. 4,181,969, 4,641,308, 4,672,307, 4,674,090 and 4,742,293 and a publication entitled "IMPROVED STUCK FAULT TESTING OF MICROPROCESSOR-BASED CIRCUITRY" by D. Becker, R. P. Boudreaus, R. S. Crouse and S.Kreitzer, IBM Technical Disclosure Bulletin, Vol.30, No. 11, April 1988, pp.419-421.

One significant disadvantage of the above and many of the known testing methods is that a special chip tester or peripheral processor unit is required for performing the test.

Many of the known testing methods effective for testing internal logic functions of individual chips cannot be easily or efficiently applied for isolation of stuck faults in the address, data and control busses in the microprocessor-based system. Some testing methods include diagnostic subroutines that use the system busses for testing various components of the microprocessor-based system so that a bus fault can result in erroneous failure indications and random code execution in the microprocessor. Other testing methods require additional in put/output pins or other special changes to individual chips.

U.S. patent 4,542,509 discloses a method and apparatus for fault testing a clock distribution network in a data processor. This approach is not practical for testing microprocessor system busses due to the large number of latches required.

Important objects of the present invention are to provide an improved method and apparatus for fault testing address, data and control busses in a microprocessor-based system; to provide such a fault testing method that periodically tests the microprocessor system busses to facilitate early error detection and failure reporting; to provide such a fault testing method and apparatus that does not require special signals from or special changes in other components in the system; and to provide such a fault testing method and apparatus that facilitates efficient and reliable error detecting operations.

These advantages are brought by the invention as claimed in claim 1 and 3.

In brief, the objects and advantages of the present invention are achieved by a method and apparatus for fault testing data, address and control busses in a microprocessor based system having a plurality of common Input/Output (CIO) bus drivers connected between the microprocessor and the data, address and control busses being tested. A time extended reset signal is generated responsive to a system reset signal and the generated reset signal is applied to the microprocessor to isolate the microprocessor from the busses being tested. The CIO bus drivers are enabled for driving a test signal. A test data signal including a logical one state and a logical zero state is applied to the CIO bus drivers. Bus signals are detected responsive to the applied test data signal and an error signal is generated responsive to the detected bus signals indicating a bus fault.

The present invention together with the above and other objects and advantages may best be understood from the following detailed description of the embodiment of the invention illustrated in the drawings, wherein:
FIG. 1 is a block diagram of a testing system or sequencer which may be employed in carrying out the testing method of the invention;
FIG. 2 is a state diagram illustrating exemplary sequential states of the testing system of FIG. 1 which may be employed in carrying out the testing method of the invention; and
FIG. 3 is a timing diagram illustrating the control signals which may be employed in carrying out the testing method of the invention.

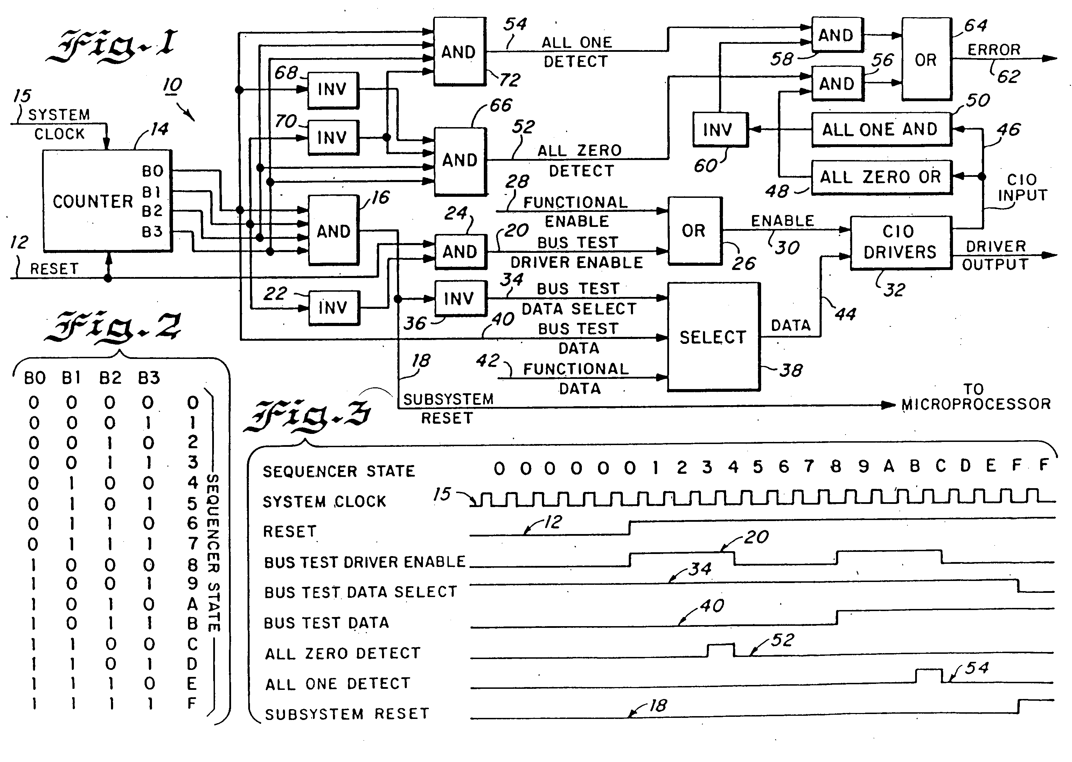

Referring now to the drawings, in FIG. 1 there is illustrated a block diagram representation of a fault testing logic system according to the invention generally designated by the reference numeral 10. Fault testing logic system 10 performs the stuck fault testing method of the invention generating a predefined test sequence for stuck fault testing of address, data and control busses in a microprocessor-based system. The stuck fault testing method is periodically performed in response to a conventional system reset signal indicated at a line 12 received from the microprocessor-based system (not shown). The conventional system reset signal 12 is generated at least with each initial program load (IPL) in the microprocessor-based system. Fault testing logic system or sequencer 10 can be implemented as a part of an integrated circuit chip in the microprocessor-based system for providing stuck fault diagnostics of the microprocessor system busses.

Sequencer 10 can be implemented with logic circuitry as illustrated in FIG. 1 for carrying out the testing method of the invention; however, it should be understood that various other logic circuitry could be used. Sequencer 10 includes a 4-bit counter 14 adapted for receiving and being reset in response to the system reset signal 12. Counter 14 includes four output bits B0, B1, B2 and B3 for providing sixteen sequential counter states 0000-1111 responsive to a system clock signal indicated at a line 15 following each reset signal 12.

Referring also to FIGS. 2 and 3, sequential counter states 0000-1111 provided by the counter 14 with sequencer states 0-F for the sequencer 10 are listed in FIG. 2 and shown in FIG. 3 together with control signals generated during test sequence. An initial counter state 0000 results in response to an active low system reset signal 12 applied to the counter 14. The counter output bits B0, B1, B2, and B3 are applied to a four-input AND gate 16. A time extended subsystem reset signal indicated at a line 18 is generated at the output of AND gate 16. The subsystem reset signal 18 remains low while the counter 14 counts from the initial counter state 0000 through the counter state 1110. At the final counter state 1111 the subsystem reset signal 18 returns inactive high.

Isolation of the busses under test from devices attached to the system busses is facilitated by the time extended subsystem reset signal 18. Subsystem reset signal 18 is applied to the microprocessor and other system devices (not shown) attached to the busses under test to prevent signals from the attached devices from being applied to the busses during the fault testing by sequencer 10.

A bus test driver enable control signal indicated at a line 20 is generated by applying the system reset signal 12 and an inverted B1 output of an inverter 22 to a two-input AND gate 24. The bus test enable control signal 20 is activated high in response to the reset signal 12 returning inactive high with a high inverted B1 output applied to AND gate 24. At sequencer state 4 or count 0100 through sequencer state 7 or count 0111, the bus test enable control signal 20 is deactivated low responsive to the low inverted B1. At sequencer state 8 or count 1000 through sequencer state B or count 1011, the bus test enable control signal 20 is activated high in response to the high inverted B1 applied to AND gate 24 and is deactivated low at sequencer state C or count 1100.

The bus test enable control signal 20 is applied to an input of an OR gate 26 with a functional enable signal indicated at a line 28 applied to the other input of OR gate 26. An enable signal indicated at a line 30 generated at the output of OR gate 26 corresponds to the bus test enable control signal 20 during the test sequence.

A plurality of common input/output (CIO) drivers 32 are operatively connected to the busses to be tested. Enable signal 30 is applied to the CIO drivers 32 to enable testing of the bus lines. It should be understood that simultaneous switch problems can easily be prevented by enabling a maximum selected number of the CIO drivers 32 at one time, for example, by providing delay circuits for selectively delaying the enable signal 30 to selected ones of the CIO drivers 32 under test.

A bus test data select signal indicated at a line 34 is generated at the output of an inverter gate 36 by applying the ANDed combination of output bits B0, B1, B2 and B3 or the subsystem reset signal 18 to the input of the inverter gate 36. The bus test data select signal 34 is applied to a select gate 38 that couples a bus test data signal indicated at a line 40 or functional data indicated at a line 42 to the CIO drivers 32 via its data output indicated at a line 44.

Counter output bit B0 provides the bus test data signal 40 of a logical zero during sequencer states 0-7 or count 0000-0111 and of a logical one during sequencer states 8-F or count 1000-1111. CIO input indicated at a line 46 of the multiple CIO drivers 32 are applied to an all zero detect module or OR gate 48 and an all one detect module or AND gate 50. With the CIO drivers 32 enabled by the high bus test driver enable signal 20 during counter states 0000-0011 and the logical zero data signal 40, the output of OR gate 48 is a logical zero unless an error is indicated. With the CIO drivers 32 enabled by the high bus test driver enable signal 20 during counter states 1000-1011 and the logical one data signal 40, the output of the AND gate 50 is a logical one unless an error is indicated.

An all zero detect signal indicated at a line 52 and an all one detect signal indicated at a line 54 is applied to an input of a pair of two-input AND gates 56 and 58, respectively. The other input of AND gate 56 is connected to the output of the OR gate 48. The other input of AND gate 58 is connected via an INVERTER gate 60 to the output of the AND gate 50.

An error signal at a line 62 identifies either a stuck high or stuck low fault in the busses being testing. The output of gates 56 and 58 is applied to an OR gate 64 to generate the error signal 62 at the output of the OR gate 64. The error detect signals 52 and 54 are generated active high a selected number of system clock cycles after the CIO drivers 32 have been enabled via bus test driver enable signal 20.

At sequencer state 3 or count 0011, an active high all zero detect signal 52 is generated at the output of a four-input AND gate 66 having inverted B0 and B1 outputs of inverter gates 68 and 70 and B2 and B3 applied to its inputs. At sequencer state B or count 1011, an active high all one detect signal 54 is generated at the output of a four-input AND gate 72 having the inverted B1 output of inverter gate 70 and B0, B2 and B3 applied to its inputs. The error signal 62 is generated indicating a detected error when a logical one results at the output of OR gate 48 with the all zero detect signal 52 activated high or when a logical zero results at the output of AND gate 50 with the all one detect signal 54 activated high.

At sequencer state F or count 1111, the subsystem reset signal 18 goes inactive high. The CIO drivers 32 are enabled responsive to the functional enable signal 28. The bus test data select signal 34 returns low and the functional data 42 for the CIO drivers 32 are selected. Sequencer 10 remains at the sequencer state F or count 1111 until the system reset signal 12 is activated.

## Claims

1. A method of stuck-fault testing data, address and control busses in a microprocessor-based system having a plurality of common Input/output (CIO) bus drivers (32) connected between the microprocessor and the data, address and control busses being tested, said method comprising the steps of:
- generating a time extended reset signal (18) in response to a system reset signal (12), the time extended reset signal being used to isolate the busses under test from devices attached to them, and applying said generated reset signal (18) to the microprocessor;
- initializing and triggering a counter (14) in response to the the system reset signal (12);
- enabling the CIO bus drivers (32) to drive a test data signal (40) by coupling a predetermined counter output bit to the enable inputs (30) of all CIO bus drivers (32), said test data signal (40) including a logical one and a logical zero state;
- providing a predetermined counter output bit as test data signal (40) to all CIO bus drivers;
- detecting and comparing the bus signals on different bus lines in response to a predetermined counter state;
- generating an error signal (62) if the bus signals are not equal.

2. A method according to claim 1 wherein said steps of detecting bus signals responsive to said applied test data signal (40) and generating an error signal (62) responsive to said detected bus signals indicating a bus fault includes the steps of:
- identifying a first predetermined sequential counter state,
- detecting bus signals responsive to said first predetermined sequential counter state and generating said error signal (62) responsive to a logical one detected bus signal,
- identifying a second predetermined sequential counter state,
- detecting bus signals responsive to said second predetermined sequential counter state and generating said error signal (62) responsive to a logical zero detected bus signal.

3. Apparatus for fault testing data, address and control busses in a microprocessor-based system having a plurality of common Input/output (CIO) bus drivers (32) connected between the microprocessor and the data, address and control busses being tested comprising:
- means (16) for generating a time extended reset signal (18) in response to a system reset signal (12), said time extended reset signal (18) being used to isolate the busses under test from devices attached to them;
- means coupling said generated reset signal (18) to the microprocessor;
- counting means (14) initialized and triggered in response to said system reset signal (12);
- means (14, 24, 22) for generating a bus test data signal (40) including at least a logical one state and a sequential logical zero state in response to a predetermined output bit of said counting means (14)
- means (26, 24) for enabling the CIO bus drivers (32) for driving said bus test data signal (40);
- means (48, 50) for detecting bus signals responsive to said applied test data signal (40);
- means (56, 58, 64) for generating an error signal (62) responsive to at least one of said detected bus signals indicating a logical zero responsive to said logical one state of said bus test data signal (40) and responsive to at least one of said detected bus signals indicating a logical one responsive to said logical zero state of said bus test data signal (40).

4. Apparatus according to claim 3 characterized in that it includes AND circuit means (16) for combining sequential output states of said counting means in order to generate said time extended reset signal (18).

5. Apparatus according to claim 4 wherein said bus signal detecting means (48, 50) include OR circuit means (48) for combining said detected bus signals, AND circuit means (50) for combining said detected bus signals, means for identifying a first predetermined sequential counter state and for generating an error signal (62) responsive to a one output of said OR circuit means (48), and means for identifying a second predetermined sequential counter state and for generating an error signal responsive to a zero output of said AND circuit means (50).

6. Apparatus according to claim 5 wherein said CIO bus drivers enabling means (24, 26) for driving said bus test data signal (40) is activated a selected number of sequential counter states before said first and second predetermined counter states

## Patentansprüche

1. Ein Verfahren zum Hängenbleib-Fehlertesten von Daten-, Adreß- und Steuerbussen in einem Mikroprozessorsystem mit einer Vielzahl von gemeinsamen Eingangs-/Ausgangs-(CIO)-Bustreibern (32), die zwischen dem Mikroprozessor und den zu testenden Daten-, Adreß- und Steuerbussen angeschlossen sind, wobei das genannte Verfahren folgende Schritte umfaßt:
- Erzeugen eines zeitverlängerten Reset-Signals (18) in Antwort auf ein System-Reset-Signal (12), wobei das zeitverlängerte Reset-Signal dazu dient, die zu testenden Busse von den an sie angeschlossenen Geräten zu trennen, und Einspeisen des genannten erzeugten Reset-Signals (18) in den Mikroprozessor;
- Initialisieren und Anstoßen eines Zählers (14) in Antwort auf das System-Reset-Signal (12);
- Freigeben der CIO-Bustreiber (32) zum Antreiben eines Testdatensignals (40) durch Koppeln eines vorbestimmten Zählerausgangsbits mit den Freigabeeingängen (30) aller CIO-Bustreiber (32), wobei das genannte Testdatensignal (40) einen logischen Eins- und einen logischen Null-Zustand enthält;
- Bereitstellen eines vorbestimmten Zählerausgangsbits als Testdatensignal (40) an alle CIO-Bustreiber;
- Ermitteln und Vergleichen der Bussignale auf verschiedenen Busleitungen in Antwort auf einen vorbestimmten Zählerzustand;
- Erzeugen eines Fehlersignals (62), wenn die Bussignale nicht gleich sind.

2. Eine Methode nach Anspruch 1, bei der die genannten Schritte des Ermittelns von Bussignalen in Antwort auf das genannte eingespeiste Testdatensignal (40) und des Erzeugens eines Fehlersignals (62) in Antwort darauf, daß die genannten ermittelten Bussignale einen Busfehler anzeigen, folgende Schritte umfassen:
- Erkennen eines ersten vorbestimmten sequentiellen Zählerzustands,
- Ermitteln von Bussignalen in Antwort auf den genannten ersten vorbestimmten sequentiellen Zählerzustand und Erzeugen des genannten Fehlersignals (62) in Antwort auf ein ermitteltes Bussignal, das einen logischen Eins-Zustand anzeigt,
- Erkennen eines zweiten vorbestimmten sequentiellen Zählerzustands,
- Ermitteln von Bussignalen in Antwort auf den genannten zweiten vorbestimmten sequentiellen Zählerzustand und Erzeugen des genannten Fehlersignals (62) in Antwort auf ein ermitteltes Bussignal, das einen logischen Null-Zustand anzeigt.

3. Vorrichtung zum Fehlertesten von Daten-, Adreß- und Steuerbussen in einem Mikroprozessorsystem mit einer Vielzahl von gemeinsamen Eingangs-/Ausgangs-(CIO)-Bustreibern (32), die zwischen dem Mikroprozessor und den zu testenden Daten-, Adreß- und Steuerbussen angeschlossen sind, folgendes umfassend:
- Mittel (16) zum Erzeugen eines zeitverlängerten Reset-Signals (18) in Antwort auf ein System-Reset-Signal (12), wobei das genannte zeitverlängerte Reset-Signal (18) zur Trennung der zu testenden Busse von den an sie angeschlossenen Geräten dient;
- Mittel, welches das genannte erzeugte Reset-Signal (18) an den Mikroprozessor koppelt;
- Zählmittel (14), das in Antwort auf das genannte System-Reset-Signal (12) initialisiert und angestoßen wird;
- Mittel (14, 24, 22) zum Erzeugen eines Bus-Testdatensignals (40) in Antwort auf ein vorbestimmtes Ausgangsbit des genannten Zählmittels (14), mindestens einen logischen Eins-Zustand und einen sequentiellen logischen Null-Zustand umfassend,;
- Mittel (26, 24), die die CIO-Bustreiber (32) freigeben, um das genannte Bus-Testdatensignal (40) anzutreiben;
- Mittel (48, 50) zum Ermitteln von Bussignalen in Antwort auf das genannte eingespeiste Testdatensignal (40);
- Mittel (56, 58, 64), zum Erzeugen eines Fehlersignals (62) in Antwort auf mindestens eines der genannten ermittelten Bussignale, die in Antwort auf den genannten logischen Eins-Zustand des genannten Bus-Testdatensignals (40) eine logische Null anzeigen, und in Anwort auf mindestens eines der genannten ermittelten Bussignale, die in Antwort auf den genannten logischen Nullzustand des genannten Bus-Testdatensignals (40) eine logische Eins anzeigen.

4. Vorrichtung nach Anspruch 3, dadurch gekennzeichnet, daß sie UND-Schaltungsmittel (16) enthält, um die sequentiellen Ausgangszustände der genannten Zählmittel zu kombinieren, um das genannte zeitverlängerte Reset-Signal (18) zu erzeugen.

5. Vorrichtung nach Anspruch 4, bei der die genannten Bussignal-Ermittlungsmittel (48, 50) ODER-Schaltungsmittel (48) enthalten, um die genannten ermittelten Bussignale zu kombinieren, UND-Schaltungsmittel (50), um die genannten ermittelten Bussignale zu kombinieren, Mittel zum Erkennen eines ersten vorbestimmten sequentiellen Zählerzustands und zum Erzeugen eines Fehlersignals (62), in Antwort auf einen Ausgang des genannten ODER-Schaltungsmittels (48), und Mittel zum Erkennen eines zweiten vorbestimmten sequentiellen Zählerzustands und zur Erzeugung eines Fehlersignals in Antwort auf einen Null-Ausgang des genannten UND-Schaltungsmittels (50).

6. Vorrichtung nach Anspruch 5, bei der die genannten Freigabemittel (24, 26) für die CIO-Bustreiber zum Antreiben des genannten Bus-Testdatensignals (40) eine ausgewählte Anzahl von sequentiellen Zählerzuständen vor dem genannten ersten und zweiten vorbestimmten Zählerzustand aktiviert werden.

## Revendications

1. Procédé pour détecter des erreurs de blocage sur des bus de données, d'adresses et de commande d'un système à microprocesseur comprenant une pluralité de circuits d'attaque de bus (32) à entrées/sorties communes ("CIO") connectées entre le microprocesseur et les bus de données, d'adresses et de commande en cours de contrôle, ledit procédé comprenant les étapes consistant à :
générer un signal de réinitialisation étendu dans le temps (18) en réponse à un signal de réinitialisation système (12), le signal de réinitialisation étendu dans le temps servant à isoler les bus sous contrôle des dispositifs qui lui sont connectés, et appliquer ledit signal de réinitialisation généré (18) au microprocesseur;
initialiser et déclencher un compteur (14) en réponse au signal de réinitialisation système (12);
permettre aux circuits d'attaque de bus CIO (32) d'attaquer un signal de données de contrôle (40) en couplant un bit de sortie de compteur prédéterminé aux entrées de validation (30) de l'ensemble des circuits d'attaque de bus CIO (32), ledit signal de données de contrôle (40) incluant un état un logique et un état zéro logique;
fournir un bit de sortie de compteur prédéterminé comme signal de données de contrôle à l'ensemble des circuits d'attaque de bus CIO;
détecter et comparer les signaux de bus sur les différentes lignes de bus en réponse à un état de compteur prédéterminé;
générer un signal d'erreur (62) si les signaux de bus ne sont pas identiques.

2. Procédé selon la revendication 1, dans lequel les dites étapes consistant à détecter des signaux de bus en réponse au dit signal de données de contrôle (40) appliqué et à générer un signal d'erreur (62) en réponse aux dits signaux de bus détectés indiquant une erreur de bus comprennent les étapes consistant à :
identifier une premier état de compteur séquentiel prédéterminé, détecter des signaux de bus sensibles au dit premier état de compteur séquentiel prédéterminé et générer un signal d'erreur (62) en réponse à la détection d'un signal de bus un logique,
identifier un deuxième état de compteur séquentiel prédéterminé, et
détecter des signaux de bus sensibles au dit deuxième état de compteur séquentiel prédéterminé et générer ledit signal d'erreur (62) en réponse à la détection d'un signal de bus zéro logique.

3. Appareil pour détecter des erreurs sur des bus de données, d'adresses et de commande d'un système à microprocesseur comprenant une pluralité de circuits d'attaque de bus à entrées/sorties communes ("CIO") (32) connectés entre le microprocesseur et les bus de données, d'adresses et de commande en cours de contrôle, comprenant :
un élément (16) pour générer un signal de réinitialisation étendu dans le temps (18) en réponse à un signal de réinitialisation système (12), ledit signal de réinitialisation étendu dans le temps (18) servant à isoler les bus sous contrôle des périphériques qui leur sont connectés;
un élément pour coupler ledit signal de réinitialisation généré (18) au dit microprocesseur;
un dispositif de comptage (14) initialisé et déclenché en réponse au dit signal de réinitialisation système (12);
un dispositif (14, 24, 22) pour générer un signal de données de contrôle de bus (40) incluant au moins un état un logique et un état zéro logique séquentiel en réponse à un bit de sortie prédéterminé du dit dispositif de comptage (14);
un dispositif (26, 24) pour valider les circuits d'attaque de bus CIO (32) pour attaquer ledit signal de données de contrôle de bus (40);
un dispositif (48, 50) pour détecter des signaux de bus sensibles au dit signal de données de contrôle de bus appliqué (40); et
un dispositif (56, 58, 64) pour générer un signal d'erreur (62) sensible à au moins l'un des dits signaux de bus détectés indiquant un zéro logique en réponse au dit état un logique du dit signal de données de contrôle de bus (40), et sensible à au moins l'un des dits signaux de bus détectés indiquant un un logique en réponse au dit état zéro logique du dit signal de données de contrôle de bus (40).

4. Appareil selon la revendication 3, caractérisé en ce qu'il comprend un circuit ET (16) pour combiner des états de sortie séquentiels du dit dispositif de comptage afin de générer ledit signal de réinitialisation étendu dans le temps (18).

5. Appareil selon la revendication 4, dans lequel ledit dispositif de détection de signaux de bus (48, 50) comprend un circuit OU (48) pour combiner les dits signaux de bus détectés; un circuit ET (50) pour combiner les dits signaux de bus détectés; un élément pour identifier un premier état de compteur séquentiel prédéterminé et pour générer un signal d'erreur (62) en réponse à une sortie un du dit circuit OU (48); et un élément pour identifier un deuxième état de compteur séquentiel prédéterminé et pour générer un signal d'erreur en réponse à une sortie zéro du dit circuit ET (50).

6. Appareil selon la revendication 5, dans lequel ledit dispositif de validation de circuits d'attaque de bus CIO (24, 26) pour attaquer ledit signal de données de contrôle de bus (40) est activé un nombre sélectionné d'états de compteur séquentiels avant les dites premier et deuxième états prédéterminés.
